# EUROPEAN PATENT SPECIFICATION

(11) **EP 4 160 624 B1**
(45) Date of publication and mention of the grant of the patent: **17.04.2024**
(21) Application number: 21838572.2
(22) Date of filing: 05.07.2021
(51) Int. Cl.: H01B 5/14, H01B 13/00, G06F 3/041, G06F 3/044, B32B 15/04

(54) **DOUBLE-SIDED CONDUCTIVE FILM, COATING METHOD, AND TOUCH SCREEN**
DOPPELSEITIGER LEITFÄHIGER FILM, BESCHICHTUNGSVERFAHREN UND BERÜHRUNGSBILDSCHIRM
FILM CONDUCTEUR DOUBLE FACE, PROCÉDÉ DE REVÊTEMENT ET ÉCRAN TACTILE

(30) Priority: 09.07.2020 CN 202010655650
(43) Date of publication of application: 05.04.2023
(73) Proprietor: Beijing Zenithnano Technology Co., Ltd., Beijing 100094 (CN)
(72) Inventor: ZHANG, Yuchun, Beijing 100094 (CN); ZHONG, Shudong, Beijing 100094 (CN)
(74) Representative: Bayramoglu et al.
(86) International application number: PCT/CN2021/104611
(87) International publication number: WO 2022/007767

(56) References cited:
- CN-A- 103 345 337
- CN-A- 103 556 120
- CN-A- 106 756 789
- CN-A- 107 405 864
- CN-A- 111 128 443
- CN-A- 111 883 284
- KR-A- 20160 082 711
- US-A1- 2017 358 383
- US-A1- 2018 072 019

## Description

### TECHNICAL FIELD

The present application relates to the field of optical films, in particular to a double-sided conductive film and a touch screen.

### BACKGROUND

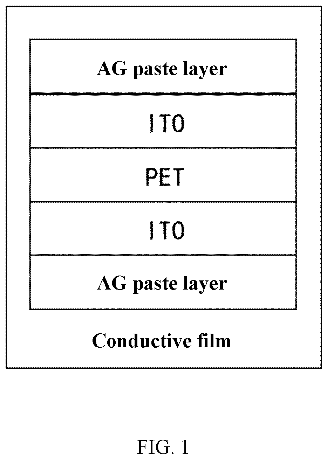

The current capacitive touch screen mostly adopts printed silver paste wiring, and has a structure mostly shown in FIG. 1, including a substrate layer (PET layer), conductive layers (ITO) provided on two sides of the PET, and a silver paste layer provided on an outer side of each conductive layer. The silver paste layer is coated and printed on the conductive layer, and then the silver paste layer is etched to form the silver paste wiring. The exposed area after etching is used as a display area of the touch screen. The silver paste wiring part forms a common frame after covering treatment, such as a black frame of two layers of a mobile phone.

Apparently, in order to expand the display area, it will be better to have the narrower wiring part, at the same time, the conductive performance of the wiring should be ensured. In the silver paste coating mode, the silver paste will be broken due to too narrow wiring, and the conductivity will be damaged. Therefore, the line width × line distance of the current silver paste is generally not less than 100 µm × 100 µm. The problem that needs to be solved at present is how to narrow the line width of the wiring on the premise of ensuring the conductive performance, so as to reduce the line width of the frame and expand the display area. CN111128443A (Huake Intelligence Tech Co Ltd; 8 May 2020) discloses a transparent conductive film and a preparation method thereof. The conductive film comprises a transparent carrier, wherein an upper electrode layer and a protective layer are sequentially arranged on the upper surface of the transparent carrier, and a lower electrode layer and a protective layer are sequentially arranged on the lower surface of the transparent carrier; the upper electrode layer sequentially comprises a first conductive layer, an organic bonding layer and a second conductive layer, and the lower electrode layer sequentially comprises a first conductive layer, an organic bonding layer and a second conductive layer; the first conductive layer/the second conductive layer in the upper electrode layer and the lower electrode layer are symmetrically arranged; the first conductive layer is a metal or metal oxide conductive layer, and the second conductive layer is a nanowire or nanoring conductive layer. US2018/072019A1 (Shimoji Takumi [JP] et al; 15 March 2018) discloses a conductive substrate that includes a transparent base material, a metal layer formed on at least one surface of the transparent base material, and a blackened layer formed on at least one surface of the transparent base material. The blackened layer contains elemental copper and/or a copper compound, and elemental nickel and a nickel compound. The nickel compound includes a nickel oxide and a nickel hydroxide. US2017/358383A1 (Fujino Nozomi [JP] et al; 14 December 2017) discloses a transparent conductive film that includes: a transparent film substrate; an optical adjustment layer; and a transparent conductive layer, in which the optical adjustment layer and the transparent conductive layer are laminated on a main surface of the transparent film substrate in this order. The optical adjustment layer includes a dry-type optical adjustment layer including an inorganic oxide. The transparent conductive layer includes a metal oxide including indium.

### SUMMARY

The present application provides a double-sided conductive film and a touch screen to solve the above problem in the prior art.

The present application is directed to the subject matter as defined in the appended set of claims.

### BRIEF DESCRIPTION OF THE DRAWINGS

In order to more clearly illustrate embodiments of the present application or the technical schemes in the prior art, the drawings required for use in the embodiments will be briefly described below. It is obvious that the drawings in the description below are only some embodiments of the present application, and other drawings can be derived from these drawings by those of ordinary skills in the art without making creative efforts.
FIG. 1 is a structural diagram of a conductive film in the prior art; and
FIG. 2 is a structural diagram of a transparent conductive film provided in an embodiment of the present application.

### DETAILED DESCRIPTION OF THE EMDOBIMENTS

The technical schemes in the embodiments of the present application will be clearly and completely described below with reference to the drawings in the embodiments of the present application. Obviously, the described embodiments are only a part of the embodiments of the present application, rather than all the embodiments. Based on the embodiments in the present application, all other embodiments obtained by those of ordinary skill in the art shall fall within the protection scope of the present application. The present application is intended to provide a double-sided conductive film with a new structure, wherein CU and a CU alloy are utilized to replace a silver paste as wiring, and a low-resistance film layer with a resistance lower than 100 ohms is used, so that the double-sided low-resistance conductive film is realized, and the conductive performance can be still ensured under a line width of 5 µm × 5 µm.

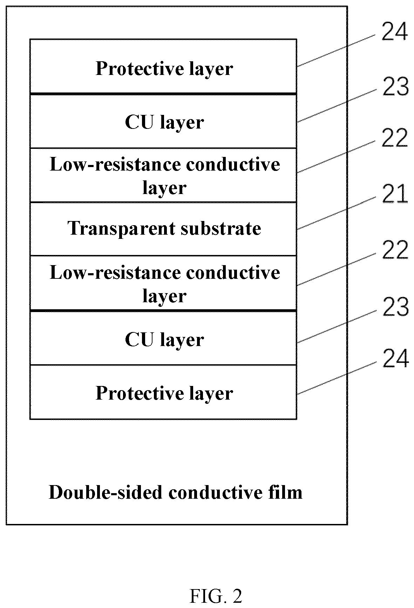

FIG. 2 shows a structural diagram of a double-sided conductive film provided by the present invention, which specifically comprises: a transparent substrate 21, and low-resistance conductive layers 22, CU layers 23 and protective layers 24 which are sequentially stacked on two sides of the transparent substrate 21; the protective layer 24 is a CU alloy layer; the low-resistance conductive layer 22 is configured to conduct electricity, and the low-resistance conductive layer 22 has a resistance of not greater than 100 ohms.

The thickness of the Cu layer may preferably be 100 nm to 300 nm, and the resistance value is preferably 0.1 ohms to 0.3 ohms.

The protective layer is a Cu alloy or an Mo alloy, such as CuNi (Ni accounting for 10 wt% to 90 wt%), CuNiTi (Ni accounting for 10 wt% to 50 wt%, and Ti accounting for 1 wt% to 10 wt%), CuNiOx (Ni accounting for 10 wt% to 90 wt%), and MoNbOx (Nb accounting for 0 wt% to 10 wt%). The thickness of the protective layer is preferably 5 nm to 100 nm.

The CU layer and the protective layer is provided on the low-resistance conductive layer by means of sputtering.

The conductive film is formed by coating, and the double-sided conductive film needs to be double-sided-coated. In the current double-sided coating process, the substrate and the coated film layer generate stress during the first coating. Although a water cooling device is configured to cool the equipment in the coating process, the cooling speed is limited, so the stress cannot be released during the second coating, and the heat from the coating process cannot be released.Hence, the coating speed is limited in the second coating process. The inconsistent coating speeds of the two coating processes will result in inconsistent appearances of the double-sided film.

Therefore, the present application adopts an air cooling mode to cool the equipment in the coating process, and helium or argon and other inert gases can be selected for the air cooling. Both the water cooling mode and the air cooling mode can also be selected for cooling the equipment.

Through the air cooling mode, the heat in the two coating processes can be rapidly reduced, so that the stress generated by the first coating is reduced, the heat dissipation in the second coating process is also ensured, and the consistency of the appearances of the two coatings is further realized on the premise of ensuring the coating speed.

In the air cooling mode, the stress generated by the first coating is 1-3 N/m².

In order to realize low-resistance performance, a metal layer doped layer may be selected for the low-resistance conductive layer in the present application, and the low-resistance conductive layer specifically comprises a first metal doped layer and a first transparent conductive material layer; the metal doped layer is a doped layer of a metal and a nitride metal and/or a metal and an oxide metal.

The doped layer in which the metal and the nitride/oxide metal coexist has a characteristic that even in the case of a thinner thickness, such as less than 10 nm, it is still a continuous film layer, and its conductivity is greatly improved compared with a pure metal layer with the same thickness. In an actual configuration, the thickness of the metal doped layer may be set to below 10 nm.

The metal doped layer can be formed by introducing a small amount of O₂ and/or N₂ during the metal target coating process so that the metal and the oxide/nitride metal coexist. The metal is typically Ag, Cu, Al, Mo, an Ag alloy, a Cu alloy, an Al alloy, an Mo alloy, and the like. The atomic percentage of oxygen or nitrogen atoms in the metal doped layer is 1.5 at% to 5.5 at%. The atomic percentage of oxygen or nitrogen atoms may be controlled by controlling the amount of O₂ and/or N₂ introduced. In a preferred embodiment, O₂ is introduced into metal Ag, and N₂ is introduced into metal Cu.

In order to ensure the electrical conductivity of the conductive film, the metal doped layer needs to adopt a continuous film layer structure, and each layer of the metal doped layer has a thickness of greater than 10 nm. The material of the metal doped layer may preferably be silver.

In an embodiment, the low-resistance conductive layer comprises a second metal doped layer, a second transparent conductive material layer, a third metal doped layer, and a third transparent material layer which are sequentially stacked. Both the second metal doped layer and the third metal doped layer are doped layers of a metal and a nitride/oxide metal.

In the current technology, the glass and OCA glue of the touch screen have a relatively high refractive index of about 1.5. However, the current low-resistance conductive layer has a low overall refractive index of about 0.8-1.4, which cannot be matched with the glass and OCA glue, resulting in chromatic aberration. Therefore, in the present application, the metal doped layer is arranged in two layers, and the overall refractive index of the conductive layer can be improved under the condition that the total thickness of the metal doped layer is the same as the thickness of a single metal doped layer. If the single metal doped layer is 26 nm, the single metal doped layer can be arranged in two 13 nm metal doped layers; it can also be arranged in two layers with different thicknesses, such as 11 nm and 15 nm.

Through the arrangement of the two metal doped layers, the overall refractive index of the conductive layer can reach 1.4-1.5, so that the refractive index of the conductive layer matching with the refractive index of the glass and OCA glue can be realized, and the light transmittance of the overall touch screen product is improved.

The concept of the layer division arrangement can also be applied to the case of conducting through a single pure metal layer, and at this time, the conductive layer comprises a first metal layer, a fourth transparent conductive material layer, a second metal layer, and a fifth transparent material layer which are sequentially stacked.

The metal layer is arranged in two layers, and the overall refractive index of the conductive layer can be improved under the condition that the total thickness of the metal layer is the same as the thickness of a single metal layer. If the single metal layer is 30 nm in the prior art, the single metal layer may be arranged in two 15 nm metal layers in the present application; it can also be arranged in two layers with different thicknesses, such as 18 nm and 12 nm. In order to ensure the electrical conductivity of the conductive film, the metal layer needs to adopt a continuous film layer structure, and preferably, each layer of the metal layer has a thickness of greater than 10 nm. The material of the metal layer may preferably be silver.

The metal layer is arranged in two layers, and the overall refractive index of the conductive layer can be improved under the condition that the total thickness of the metal layer is the same as the thickness of a single metal layer. If the single metal layer is 30 nm in the prior art, the single metal layer may be arranged in two 15 nm metal layers in the present application; it can also be arranged in two layers with different thicknesses, such as 18 nm and 12 nm.

In order to ensure the electrical conductivity of the conductive film, the metal layer needs to adopt a continuous film layer structure, and each layer of the metal layer has a thickness of greater than 10 nm. The material of the metal layer may preferably be silver.

In a more preferred embodiment, the double-sided conductive film further comprises IM layers provided between the transparent substrate and each of the low-resistance conductive layers; the IM layer comprises an organic material layer and an inorganic material layer which are sequentially stacked on the transparent substrate.

The inorganic material layer is in contact with the low-resistance conductive layer in consideration of not affecting the electrical conductivity of the low-resistance conductive layer. C\H\O resin with a high refractive index of 1.6-1.7 may be selected for the organic material layer which is doped with Si, Zr, Ti and other metal elements, and the thickness can be set according to needs and is preferably 0.5 µm to 5 µm.

The inorganic material layer may be a single layer or may be a plurality of matching layers having different refractive indices.

If the inorganic material layer is a single layer, a non-conductive metal material with an insulating sheet resistance of greater than 10*8 Ω/□ may be selected, for example: Ti, In, Sn, an InSn alloy (the doping weight percentage of In is 0-50%), and an SiAl alloy (the doping weight percentage of Al is 0-50%), and the thickness can be set according to needs and is preferably 0.5 µm to 80 µm.

The inorganic material layer, for example, is a plurality of layers, and may be formed by combining at least one layer of a low refractive index material and at least one layer of a high refractive index material, and has an insulating sheet resistance of greater than 10*8 Ω/□. The low refractive index material can be a metal oxide, a non-metal oxide, a sulfide, a fluoride and a carbide with a refractive index of 1.2-1.7, such as SiO₂, Al₂O₃, MgF, MgS and SiC, and the thickness can be set to 10 nm to 500 nm; the high refractive index material can be a metal oxide, a nitride and a sulfide with a refractive index of 1.8-2.4, or a dopant (a doping material comprises one or more of Al, Ga, Zr, B, Y, Mo and Sn) thereof, such as TiO₂, SnO₂, ZnO, Nb₂O₅, TazOs, Si₃N₄ and ZnS, the dopant comprises AZO, GZO, YZO and the like, and the thickness can be set to 2 nm to 200 nm.

In the actual preparation process, a first IM layer is preferably coated, and a second IM layer is preferably sputtered, which takes into account that although the sputtering mode has better adhesion, the sputtered layer has chromatic aberration. Although the coating mode has general adhesion, the chromatic aberration is small, so the IM layers may be arranged by adopting the combination of coating and sputtering to achieve the comprehensive requirements of adhesion and chromatic aberration.

In a preferred embodiment, more IM layers may be provided as needed and will not be described in detail herein.

The provision of at least two IM layers allows the overall refractive index of IM layers to be lower, so as to match the conductive layer with a low reflectivity of the low-resistance conductive film. According to current low resistance technology, the conductive layer may have a resistance of less than 100 ohms, typically 20 ohms to 25 ohms, and the conductive layer has a reflectivity of 5.8. Correspondingly, in the present application, the overall reflectivity of at least two IM layers is 5.6.

The transparent substrate may be a flexible substrate, such as a transparent organic polymer PET, TAC, COP, PEN, CPI, or PI. Preferably, PET is selected.

The transparent conductive material layer may be a metal oxide, such as In₂O₃, SnO₂, ZnO, ITO (the doping weight percentage of SnzO is 0-50%), IZO (the doping weight percentage of ZnO is 0-50%), AZO (the doping weight percentage of Al₂O₃ is 0-50%), ITiTO (the doping weight percentage of TiO₂ is 0-10%), ITZO (the doping weight percentage of TIOz is 0-10%, and the doping weight percentage of ZnO is 0-40%), and FTO (the doping weight percentage of F is 0-10%).

Another embodiment of the present application discloses a touch screen, wherein the touch screen is formed by performing the etching treatment on the double-sided conductive film, and the line width formed by etching the CU layer and the protective layer is 5 µm × 5 µm, which is far less than the line width of the adopted silver paste wiring. The frame line width of the touch screen is within 2 mm.

For further realizing narrow frame, the protective layer in the present application is the blackening copper, and the frame line width of the touch screen can reach 0.5 mm.

Table 1 below shows the comparison results of the line width and line distance and the conductive performance of the wiring under different situations between the prior art and the present application. Table 2 below shows the comparison results of the stress and the appearance of the double-sided conductive film under different cooling modes between the prior art and the present application. The following are detected using a detection method known in the art. Appearance detection mode and tool: visual inspection under 1000 Lucas light source, the stress measurement tool is a stress analysis detector.

In each embodiment, the properties of the same layer are the same unless otherwise specified.

Thickness of each layer: the total thicknesses of the AG paste layer, the protective layer (CuNi), the CU layer, the substrate layer (PET layer), the low-resistance conductive layer (ITO and the metal layer, the metal doped layer) and the IM layer (IM1 and IM2) are 15 nm, 10 nm, 200 nm, 125 µm, 90 nm and 2.5 µm, respectively. The results are as follows:

**Table 1**

| Conductive film structure | Line width × line distance (µm) | Wiring resistance (ohm) |
|---|---|---|
| AG paste layer, ITO, PET, ITO, AG paste layer | 100 X100 | 1.2 |
| AG paste layer, ITO, PET, ITO, AG paste layer | 50X50 | Break |
| AG paste layer, ITO, PET, ITO, AG paste layer | 5 X5 | Break |
| CuNi (Ni: 50 wt%), CU layer, ITO, PET, ITO, CU layer, CuNi (Ni: 50 wt%) | 100 X100 | 1.2 |
| CuNi (Ni: 50 wt%), CU layer, ITO, PET, ITO, CU layer, | 50×50 | 4.8 |
| CuNi (Ni: 50 wt%) | | |
| CuNi (Ni: 50 wt%), CU layer, ITO, PET, ITO, CU layer, CuNi (Ni: 50 wt%) | 5 X5 | 480 |
| CuNi (Ni: 50 wt%), CU layer, ITO, IM1, IM2, PET, IM1, IM2, ITO, CU layer, CuNi (Ni: 50 wt%) | 5 X5 | 480 |
| CuNi (Ni: 50 wt%), CU layer, AG layer, ITO, AG layer, ITO, PET, ITO, AG layer, AG layer, ITO, CU layer, CuNi (Ni: 50 wt%) | 5 X5 | 480 |
| CuNi (Ni: 50 wt%), CU layer, AG doped layer (3%), ITO, PET, ITO, AG doped layer (3%), CU layer, CuNi (Ni: 50 wt%) | 5 X5 | 480 |
| CuNi (Ni: 60 wt%), CU layer, AG doped layer (3%), ITO, AG doped layer (3%), ITO, PET, ITO, AG doped layer (3%), ITO, AG doped layer (3%), CU layer, CuNi (Ni: 60 wt%) | 5 X5 | 480 |

**Table 2**

| Conductive film structure | Cooling mode | Stress | Appearanc e |
|---|---|---|---|
| CuNi (Ni: 50 wt%), CU layer, ITO, PET, ITO, CU layer, CuNi (Ni: 50 wt%) | Water cooling | 10N/m2 | More MD lines |
| CuNi (Ni: 50 wt%), CU layer, ITO, PET, ITO, CU layer, CuNi (Ni: 50 wt%) | Water cooling + air cooling (helium) | 1.6 N/m2 | Qualified |
| CuNi (Ni: 50 wt%), CU layer, ITO, PET, ITO, CU layer, CuNi (Ni: 50 wt%) | Air cooling (helium) | 0.8N/m2 | Qualified |
| CuNi (Ni: 50 wt%), CU layer, ITO, IM1, IM2, PET, IM1, IM2, ITO, CU layer, CuNi (Ni: 50 wt%) | Water cooling + air cooling | 1.5 N/m2 | Qualified |
| CuNi (Ni: 50 wt%), CU layer, AG layer, ITO, AG layer, ITO, PET, ITO, AG layer, AG layer, ITO, CU layer, CuNi (Ni: 50 wt%) | Water cooling + air cooling (helium) | 1.4 N/m2 | Qualified |
| CuNi (Ni: 50 wt%), CU layer, AG doped layer (3%), ITO, PET, ITO, AG doped layer (3%), CU layer, CuNi (Ni: 50 wt%) | Water cooling + air cooling (helium) | 1.2 N/m2 | Qualified |
| CuNi (Ni: 50 wt%), CU layer, AG doped layer (3%), ITO, AG doped layer (3%), ITO, PET, ITO, AG doped layer (3%), ITO, AG doped layer (3%), CU layer, CuNi (Ni: 50 wt%) | Water cooling + air cooling (helium) | 1.1 N/m2 | Qualified |

It can be seen from the data in the above table that the protective layer composed of the CU layer and the CU alloy replaces the original silver paste layer, so that the conductive performance can also be ensured under the premise of reducing the line width × line distance.

The double-sided conductive film in the present application has a low film stress of preferably 1-3 N/m². For example, the stress of the single-sided membrane can be 1 N/m² on the premise of adopting an air cooling mode. The appearance of the two sides of the double-sided conductive film under this stress tends to be consistent, and the MD lines are qualified, namely, less or no MD lines exist.

Furthermore, it should be understood that although the present specification is described according to embodiments, not every embodiment includes only an independent technical scheme, and such description of the specification is for clarity purposes only.

## Claims

1. A double-sided conductive film, comprising a transparent substrate (21), and low-resistance conductive layers (22), Cu layers (23) and protective layers (24) which are sequentially stacked on two sides of the transparent substrate (21), wherein
the low-resistance conductive layer (22) is configured to conduct electricity, and the low-resistance conductive layer (22) has a resistance of not greater than 100 ohms;
**characterized in that** the protective layer (24) is a Cu alloy layer or an Mo alloy layer;
the low-resistance conductive layer (22) comprises a second metal doped layer, a second transparent conductive material layer, a third metal doped layer, and a third transparent conductive material layer; both the second metal doped layer and the third metal doped layer are doped layers of a metal and a nitride/oxide metal;
wherein an atomic percentage of oxygen or nitrogen atoms in the metal doped layers is 1.5 at% to 5.5 at%; and each the second metal doped layer and the third metal doped layer has a thickness of greater than 10 nm.

2. The double-sided conductive film according to claim 1, **characterized in that** the Cu alloy layer contains Ni, and Ni accounts for 10-90 wt% in the Cu alloy layer.

3. The double-sided conductive film according to claim 2, **characterized in that** the protective layer (24) is a blackened layer.

4. The double-sided conductive film according to claim 1, **characterized in that** the double-sided conductive film further comprises IM layers provided between the transparent substrate (21) and each of the low-resistance conductive layers (22); the IM layer comprises an organic material layer and an inorganic material layer which are sequentially stacked on the transparent substrate (21).

5. A method for coating a double-sided conductive film, used for coating the double-sided conductive film according to any one of claims 1-4, **characterized in that** the method comprises:
in a coating process, cooling the coating process by adopting an air cooling method, wherein the first coating has the same speed as the second coating.

6. A touch screen, **characterized in that** the touch screen is formed by performing laser etching on the double-sided conductive film prepared according to claim 5, and the line width × line distance formed by etching the Cu layer (23) and the protective layer (24) is 5 µm × 5 µm to 100 µm × 100 µm.

7. The touch screen according to claim 6, **characterized in that** the protective layer (24) is blackened copper, and the frame of the touch screen has a width of 0.5 mm to 2 mm.

## Patentansprüche

1. Doppelseitiger leitfähiger Film, umfassend ein transparentes Substrat (21) und leitfähige Schichten (22) mit niedrigem Widerstand, Cu-Schichten (23) und Schutzschichten (24), die nacheinander auf zwei Seiten des transparenten Substrats (21) gestapelt sind, wobei
die leitfähige Schicht (22) mit niedrigem Widerstand dazu eingerichtet ist, Elektrizität zu leiten, und die leitfähige Schicht (22) mit niedrigem Widerstand einen Widerstand von nicht mehr als 100 Ohm aufweist;
**dadurch gekennzeichnet, dass** die Schutzschicht (24) eine Cu-Legierungsschicht oder eine Mo-Legierungsschicht ist;
die leitfähige Schicht (22) mit niedrigem Widerstand eine zweite Metall-dotierte Schicht, eine zweite transparente Schicht aus leitfähigem Material, eine dritte Metall-dotierte Schicht und eine dritte transparente Schicht aus leitfähigem Material umfasst; sowohl die zweite Metall-dotierte Schicht als auch die dritte Metall-dotierte Schicht dotierte Schichten aus einem Metall und einem Metallnitrid/- Oxid sind;
wobei ein Atomanteil von Sauerstoff- oder Stickstoffatomen in den Metall-dotierten Schichten 1,5 Atom-% bis 5,5 Atom-% beträgt;
und jede der zweiten Metall-dotierten Schicht und der dritten Metall-dotierten Schicht eine Dicke von mehr als 10 nm aufweist.

2. Doppelseitiger leitfähiger Film nach Anspruch 1, **dadurch gekennzeichnet, dass** die Cu-Legierungsschicht Ni enthält und das Ni 10-90 Gew.-% in der Cu-Legierungsschicht ausmacht.

3. Doppelseitiger leitfähiger Film nach Anspruch 2, **dadurch gekennzeichnet, dass** die Schutzschicht (24) eine geschwärzte Schicht ist.

4. Doppelseitiger leitfähiger Film nach Anspruch 1, **dadurch gekennzeichnet, dass** der doppelseitige leitfähige Film ferner IM-Schichten umfasst, die zwischen dem transparenten Substrat (21) und jeder der leitfähigen Schichten (22) mit niedrigem Widerstand bereitgestellt sind; die IM-Schicht eine Schicht aus organischem Material und eine Schicht aus anorganischem Material umfasst, die nacheinander auf dem transparenten Substrat (21) gestapelt sind.

5. Verfahren zum Beschichten eines doppelseitigen leitfähigen Films, das zum Beschichten des doppelseitigen leitfähigen Films nach einem der Ansprüche 1 bis 4 verwendet wird, **dadurch gekennzeichnet, dass** das Verfahren umfasst:
in einem Beschichtungsprozess, Kühlen des Beschichtungsprozesses durch Anwenden eines Luftkühlverfahrens, wobei die erste Beschichtung die gleiche Geschwindigkeit wie die zweite Beschichtung aufweist.

6. Berührungsempfindlicher Bildschirm, **dadurch gekennzeichnet, dass** der berührungsempfindliche Bildschirm durch Durchführen von Laserätzen auf dem nach Anspruch 5 hergestellten doppelseitig leitfähigen Film ausgebildet ist, und die Linienbreite x Linienabstand, die durch Ätzen der Cu-Schicht (23) und der Schutzschicht (24) ausgebildet wird, 5 µm × 5 µm bis 100 µm × 100 µm beträgt.

7. Berührungsempfindlicher Bildschirm nach Anspruch 6, **dadurch gekennzeichnet, dass** die Schutzschicht (24) geschwärztes Kupfer ist und der Rahmen des berührungsempfindlichen Bildschirms eine Breite von 0,5 mm bis 2 mm aufweist.

## Revendications

1. Film conducteur à double face, comprenant un substrat transparent (21), et des couches conductrices à faible résistance (22), des couches de Cu (23) et des couches protectrices (24), lesquelles sont empilées de manière séquentielle sur deux faces du substrat transparent (21),
la couche conductrice à faible résistance (22) étant configurée pour conduire l'électricité, et la couche conductrice à faible résistance (22) présentant une résistance ne dépassant pas 100 ohms ;
**caractérisé en ce que** la couche protectrice (24) est une couche en alliage de Cu ou une couche en alliage de Mo ;
la couche conductrice à faible résistance (22) comprend une deuxième couche dopée de métal, une deuxième couche de matériau conducteur transparent, une troisième couche dopée de métal, et une troisième couche de matériau conducteur transparent ; la deuxième couche dopée de métal et la troisième couche dopée de métal sont toutes deux des couches d'un métal et d'un oxyde/nitrure métallique ;
un pourcentage atomique d'atomes d'oxygène ou d'azote dans les couches dopées de métal étant de 1,5 % atomique à 5,5 % atomique ;
et chacune de la deuxième couche dopée de métal et la troisième couche dopée de métal présentant une épaisseur supérieure à 10 nm.

2. Film conducteur à double face selon la revendication 1, **caractérisé en ce que** la couche en alliage de Cu contient du Ni, et le Ni représente 10 à 90 % en poids dans la couche en alliage de Cu.

3. Film conducteur à double face selon la revendication 2, **caractérisé en ce que** la couche protectrice (24) est une couche noircie.

4. Film conducteur à double face selon la revendication 1, **caractérisé en ce que** le film conducteur à double face comprend en outre des couches IM fournies entre le substrat transparent (21) et chacune des couches conductrices à faible résistance (22) ; la couche IM comprend une couche de matériau organique et une couche de matériau inorganique qui sont empilées de manière séquentielle sur le substrat transparent (21).

5. Procédé pour le revêtement d'un film conducteur à double face, utilisé pour le revêtement du film conducteur à double face selon l'une quelconque d'une revendication 1 à 4, **caractérisé en ce que** le procédé comprend :
dans un processus de revêtement, le refroidissement du processus de revêtement par l'adoption d'un procédé de refroidissement par air, le premier revêtement présentant la même vitesse que le deuxième revêtement.

6. Écran tactile, **caractérisé en ce que** l'écran tactile est formé par l'exécution de gravage au laser sur le film conducteur à double face préparé selon la revendication 5, et la largeur de ligne x distance de ligne formée par le gravage de la couche de Cu (23) et la couche protectrice (24) est de 5 µm × 5 µm à 100 µm × 100 µm.

7. Écran tactile selon la revendication 6, **caractérisé en ce que** la couche protectrice (24) est en cuivre noirci, et le cadre de l'écran tactile présente une largeur de 0,5 mm à 2 mm.
